(19) Europäisches Patentamt
European Patent Office
Office européen des brevets

(11) EP 2 471 839 B1

## (12) EUROPEAN PATENT SPECIFICATION

(45) Date of publication and mention
of the grant of the patent:
**27.02.2019 Bulletin 2019/09**

(21) Application number: **11194925.1**

(22) Date of filing: **21.12.2011**

(51) Int Cl.:
**C08G 69/26** *(2006.01)*    **C08G 69/44** *(2006.01)*
**C08G 63/91** *(2006.01)*    **C08J 11/28** *(2006.01)*
**C08L 77/06** *(2006.01)*    **C08L 77/12** *(2006.01)*

(54) **Heat-resistant polyamide resin composition and method of preparing the same**

Wärmebeständige Polyamidharzzusammensetzung und Verfahren zu ihrer Herstellung

Composition de résine polyamide résistante à la chaleur et sa méthode de préparation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2010 KR 20100140182
06.04.2011 KR 20110031525**

(43) Date of publication of application:
**04.07.2012 Bulletin 2012/27**

(73) Proprietor: **Lotte Advanced Materials Co., Ltd.
Yeosu-si
Jeollanam-do (KR)**

(72) Inventors:
• **So Young Know**
**Uiwang-si, Gyeonggi-do (KR)**
• **Young Sub Jin**
**Uiwang-si, Gyeonggi-do (KR)**
• **San Kyun Im**
**Uiwang-si, Gyeonggi-do (KR)**
• **Bok Nam Jang**
**Uiwang-si, Gyeonggi-do (KR)**
• **Seung Hyun Jang**
**Uiwang-si, Gyeonggi-do (KR)**
• **Ki Yon Lee**
**Uiwang-si, Gyeonggi-do (KR)**
• **Suk Min Jun**
**Uiwang-si, Gyeonggi-do (KR)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
**EP-A2- 0 122 688    WO-A1-03/078502
US-A- 5 837 803    US-B1- 6 384 181**

• **SABOT ET AL: "A convenient aminolysis of
esters catalyzed by
1,5,7-triazabicyclo[4.4.0]dec-5-ene (TBD) under
solvent-free conditions", TETRAHEDRON
LETTERS, ELSEVIER, AMSTERDAM, NL, vol. 48,
no. 22, 3 May 2007 (2007-05-03), pages 3863-3866,
XP022058997, ISSN: 0040-4039, DOI:
10.1016/J.TETLET.2007.03.146**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to polyamide resin and a method for preparing the same.

Well-known polyester resins include polyethylene terephthalate (PET) and polybutylene terephthalate (PBT). These polyester resins can be used in various applications such as films, fibers, bottles, packaging materials, and the like. After use, the polyester resin product can be disposed or can be recycled. It can be difficult, however, to recycle polyester resin. Accordingly, there is a need for improved methods of recycling polyester products.

One method for recycling polyester resin includes converting low value recycled polyester resin into high value heat resistance polyamide resin. The heat resistant polyamide resin may be widely used in various applications requiring heat resistance, for example auto parts, electric and electronic products, mechanical parts, and the like.

Examples of methods for converting polyester resin into polyamide resin are disclosed in U.S. Patent Nos. 6,384,181 and 5,837,803, JP 4,317,615, and JP 3,664,577. For example, linear polyester resin having an intrinsic viscosity of 0.2dl/g or above can be reacted with a diamine compound to produce a polyamide resin or polyester amide resin partially replaced with amide group. These methods use carboxylic acid activator or inorganic salt enzymes; solvents such as methyl pyrrolidone (NMP), normal dodecylbenzene, orthodichlorobenzene, sulfolane, and the like; and hexamethylene diamine or paraphenylene diamine as the diamine. For example, the example 17 of US 5,837,803 discloses a polyamide resin prepared by polymerising butane diamine and octane diamine in the presence of a commercially available PET. However, the polymerisation is performed in the presence of ortho-dichlorobenzene. Because these methods use a solvent in the amidation reactions, the solvent used along with the reactants must be collected after the reactions are completed.

KR 2002-70589 includes a batch process that reacts the polyester resin with diamine compound in the presence of an organic solvent and an esterification catalyst, and a semibatch process that polycondenses the batch product by removing glycol components. Glycol components are removed by incorporating nitrogen gas into a reactor instead of using a high vacuum in order to promote the removal of glycol components by evaporation. Preferably, this method produces polyparaphenylene terephthalamide (a wholly aromatic polyamide), which can have high heat resistance but poor processability, using an esterification catalyst and normal dodecylbenzene as a solvent. Therefore, this method is limited to auto parts, electric and electronic products, and mechanical parts.

WO 03/078502 A1 discloses a process for making a modified thermoplastic polyester by reacting a thermoplastic polyester with a nitrogen-containing compound, wherein the thermoplastic polyester is first contacted in the solid state with an inert gas atmosphere containing at least one amino compound at a first temperature T(a), then heated to a second temperature T(b), and thereafter solid state polymerised at a third temperature T(c).

It is the object of the present invention to provide polyamide resin that can have excellent heat resistance.

This object has been achieved by the provision of a polyamide resin obtainable by polymerization of an aliphatic diamine monomer mixture (A) and polyester resin (B), wherein the aliphatic diamine monomer mixture (A) comprises aliphatic diamine monomer (a1) having 2 to 6 carbon atoms and aliphatic diamine monomer (a2) having 6 to 12 carbon atoms, with the proviso that (a1) and (a2) are different and have a different number of carbon atoms; wherein the ester group of the polyester resin (B) reacts with the aliphatic diamine monomer (a1), (a2), or both such that the number of amine ends of the polyamide resin is 30 $\mu$ eq/g to 200 $\mu$ eq/g measured by completely melting polyamide into hexafluoroisopropanol and using 0.1N HCl solution on the potential difference measurement, and wherein the amount of the endcapping agent is from 0.01 to 10.0 parts by weight, based on 100 parts by weight of polyester resin (B).

In exemplary embodiments, the polyamide resin can include a ratio (A/B) of total mole of the aliphatic diamine monomer compound (A) and total mole of polyester resin (B) of 0.90 to 1.50.

In exemplary embodiments, the polyamide resin further comprises an endcapping agent. Examples of the endcapping agent include without limitation aliphatic carboxylic acids such as acetic acid, propionic acid, butyric acid, valeric acid, caproic acid, caprilic acid, lauric acid, tridecane acid, myristic acid, palmitic acid, stearic acid, pivalic acid, and isobutylic acid; aromatic carboxylic acids such as benzoic acid, toluic acid, $\alpha$-naphtalene carboxylic acid, $\beta$-naphtalene carboxylic acid, and methyl naphthalene carboxylic acid, aliphatic carboxylic acid esters such as methyl acetate, ethylacetate, propylacetate, butylacetate, amylacetate, and 2-etoxyethyl acetate; aromatic carboxylic acid esters such as methyl benzoate, ethyl benzoate, propyl benzoate, butyl benzoate, and pentyl benzoate; and the like, and combinations thereof.

The present invention further provides a method for producing polyamide resin. The method includes:

(1) reacting an aliphatic diamine monomer mixture (A) comprising an aliphatic diamine monomer (a1) having 2 to 6 carbon atoms and an aliphatic diamine monomer (a2) having 6 to 12 carbon atoms, with the proviso that (a1) and (a2) are different and have a different number of carbon atoms; polyester resin (B); and an endcapping agent (C) in the presence of a catalyst, such as a phosphorous catalyst, for a period of about 2 hours at a temperature of 120 to 140°C;

(2) increasing the temperature to 140 to 180°C, and maintaining the temperature for 2 to 4 hours; and

(3) reducing the pressure to 2 to 10 mbar or less than 2mbar at a temperature of 180 to 200 °C for 3 to 22 hours to remove ethylene glycol byproduct, and

wherein the endcapping agent comprises an aliphatic carboxylic acid, an aromatic carboxylic acid, an aliphatic carboxylic acid ester, an aromatic carboxylic acid ester, or a combination thereof, and
wherein the amount of the endcapping agent is from 0.01 to 10.0 parts by weight, based on 100 parts by weight of polyester resin (B).

The present invention now will be described more fully hereinafter in the following detailed description of the invention in which some but not all embodiments of the invention are described. Indeed, this invention may be embodied in many different forms and should not be construed as limited to the embodiments set forth herein; rather, these embodiments are provided so that this disclosure will satisfy applicable legal requirements.

A method of manufacturing a heat resistant polyamide resin according to the present invention provides polyamide resin in which an ester group of polyester is wholly or partially amidated. The method of the invention includes reacting polyester resin with a mixture of aliphatic diamines without using organic solvent. In exemplary embodiments, the polyamide resin can be prepared by reacting a mixture of aliphatic diamine monomer (a1) having 2 to 6 carbon atoms with good reactivity and aliphatic diamine monomer (a2) having 6 to 12 carbon atoms, with the proviso that (a1) and (a2) are different and have a different number of carbon atoms with polyester resin (B) so that an ester group of the polyester resin (B) reacted with diamine is wholly or partially amidated. The resultant polyamide resin can have excellent heat resistance and low hygroscopic property.

In exemplary embodiments, the polyester resin (B) is polyethylene terephthalate, and the aliphatic diamine monomer mixture (A) comprises aliphatic diamine monomer (a1) and aliphatic diamine monomer (a2). The aliphatic diamine monomer (a1) has 2 to 6 carbon atoms, and the aliphatic diamine monomer (a2) has 6 to 12 carbon atoms. The number of carbon atoms of the aliphatic diamine monomer (a1) and (a2) are different from each other, although the number of carbon atoms of each falls within the range of carbon atoms described above.

The aliphatic diamine monomer mixture (A) can include 10 to 60 parts by weight of the aliphatic diamine monomer (a1) having 2 to 6 carbon atoms and 10 to 60 parts by weight of the aliphatic diamine monomer (a2) having 6 to 12 carbon atoms, each based on 100 parts by weight of the polyester resin (B).

Further, according to some embodiments of the present invention, the amount of the aliphatic diamine monomer (a1) and (a2) can be in a range from about any of the foregoing amounts to about any other of the foregoing amounts.

The polyamide resin may include 30 to 70mol% of the aliphatic diamine monomer mixture (A). In some embodiments, the polyamide resin may include the aliphatic diamine monomer mixture (A) in an amount of 30 to 70mol% with respect to the polyamide resin.

Further, according to some embodiments of the present invention, the amount of the aliphatic diamine monomer mixture (A) can be in a range from about any of the foregoing amounts to about any other of the foregoing amounts.

The ratio of the total moles of the aliphatic diamine monomer mixture (A) and the total moles of the polyester resin (B) (calculated based on the repeated unit) can be 0.90 to 1.50.

Each of the aliphatic diamine monomers (a1) and (a2) may have a linear or branched structure.

Examples of the aliphatic diamine monomer (a1) include without limitation 1,2-ethanediamine, 1,4-butanediamine, 1,5-pentanediamine, 1,6-hexanediamine, 2-methylpentanediamine, 3-methyl-1,5-pentanediamine, and the like, and combinations thereof.

Examples of the aliphatic diamine monomer (a2) include without limitation 1,6-hexanediamine, 1,7-heptanediamine, 1,8-octanediamine, 1,9-nonanediamine, 1,10-decanediamine, 1,11-undecanediamine, 1,12-dodecanediamine, 3-methyl-1,5-pentanediamine, 2,2,4-trimethyl-1,6-hexanediamine, 2,4,4-trimethyl-1,6-hexanediamine, 5-methyl-1,9-nonanediamine, 2,2-oxybis(ethylamine), bis(3-aminopropyl)ether, ethylene glycol bis(3-aminopropyl)ether (EGBA), 1,7-diamino-3,5-dioxoheptane, 1,10-diamino-4,7-dioxoundecane, 1,10-diamino-4,7-dioxo-5methyldecane, 1,11-undecanediamine, 1,12-dodecanediamine, 2-butyl-2-ethyl-1,5-pentanediamine, and the like, and combinations thereof.

Any aromatic or aliphatic polyester resin can be used as the polyester resin (B) without limitation. In exemplary embodiments, the polyester resin (B) can be an aromatic polyester resin, for example, polyethylene terephthalate resin.

The present invention may further comprise an end capping agent (C). By controlling an amount and application time of the end capping agent, viscosity of the polyamide resin, the number of amide ends, and the degree of amidation (DA) after amidation reaction can be controlled.

The polyamide resin of the invention can have an intrinsic viscosity [η] of 0.2 dL/g to 4.0 dL/g.

Examples of the end capping agent used in the present invention can include without limitation aliphatic carboxylic acids, aromatic carboxylic acids, aliphatic carboxylic acid esters, aromatic carboxylic acid esters, and the like, and combinations thereof. Examples of the aliphatic carboxylic acids can include without limitation acetic acid, propionic acid, butyric acid, valeric acid, caproic acid, caprilic acid, lauric acid, tridecane acid, myristic acid, palmitic acid, stearic acid, pivalic acid, isobutylic acid, and the like, and combinations thereof. Examples of aromatic carboxylic acids can include without limitation benzoic acid, toluic acid, α-naphtalene carboxylic acid, β-naphtalene carboxylic acid, methyl naphthalene carboxylic acid, and the like, and combinations thereof. Examples of the aliphatic carboxylic acid esters can include without limitation methyl acetate, ethyl acetate, propyl acetate, butyl acetate, amyl acetate, 2-etoxyethyl acetate, and the like, and combinations thereof. Examples of the aromatic carboxylic acid esters can include without limitation methyl benzoate, ethyl benzoate, propyl benzoate, butyl benzoate, pentyl benzoate, and the like, and combinations thereof. The end capping agents can be used alone or in combination with two more.

The endcapping agent used in the preparation of polyamide resin in the present invention is included in an amount of 0.01 to 10.0 parts by weight, for example 0.01 to 5.0 parts by weight, based on 100 parts by weight of the polyester resin (B).

Method of Producing the Polyamide Resin

In the manufacturing method of the invention, the aliphatic diamine monomer mixture (A) including aliphatic diamines (a1) and (a2) with a different number of carbon atoms as discussed herein and polyester resin (B) are added to a reactor with an endcapping agent and reacted under conditions sufficient to form a polyamide prepolymer. The aliphatic diamine monomer mixture (A), polyester (B), endcapping agent and catalyst are added to a reactor and stirred for about 2 hours at a temperature of 120 to 140°C. Then the temperature is increased to 140 to 180°C and maintained for 2 to 4 hours. Then, the pressure is reduced to remove ethylene glycol byproduct by evaporation. The pressure is reduced to 2 (or less) millibar (mbar) to 10 mbar at a temperature of 180 to 200°C for 3 to 22 hours.

The resultant polyamide is solid state polymerized. In exemplary embodiments, the resultant polyamide may be solid state polymerized for a period of 10 to 30 hours under a vacuum at a temperature between the glass transition temperature and melting temperature of the polyamide to increase amidation response rate and the viscosity of the polymer. In exemplary embodiments, the polymerization temperature is 180 to 250°C, for example 200 to 230°C.

The catalyst used in the present invention may be a phosphorus catalyst. Examples of the phosphorus catalyst may include without limitation phosphoric acid, phosphorous acid, hypophosphorous acid, salts or derivatives thereof, and the like, and combinations thereof. In exemplary embodiments, phosphoric acid, phosphorus acid, hypophosphorous acid, sodium hypophosphate, sodium hypophosphinate and the like, and combinations thereof may be used.

The catalyst used in the preparation of polyamide resin in the present invention may be used in an amount of 0.01 to 3.0 parts by weight, for example 0.01 to 1.0 parts by weight, and as another example 0.01 to 0.5 parts by weight, based on 100 parts by weight of the polyester resin (B).

The present invention may be better understood by examples below, which are for only illustrative purposes and are not intended to limit the scope of claims.

Example

Example 1

100 parts by weight polyethylene terephthalate (PET), 13.1 parts by weight 1,2-ethanediamine, 38.1 parts by weight 1,6-hexanediamine, 6.36 parts by weight benzoic acid, and 0.16 parts by weight sodium hypophosphinate are placed into a 1 liter autoclave, which is charged with nitrogen and purged several times to remove oxygen. The reactor is sealed and the reactants stirred for 2 hours at 120°C. Then the temperature is increased to 140°C for 30 min and the reactants are reacted for 2 hours at the same temperature. The temperature is increased for 60 min to 180°C, and the reactants are maintained for 4 hours at this temperature. Then the pressure is reduced to less than 2 mbar to remove ethylene glycol. 30 parts by weight of ethylene glycol is collected. After completion of the reaction, a polyamide prepolymer with an intrinsic viscosity of 0.20 dL/g level is collected.

A polyamide prepolymer obtained through the above method is subjected to solid state polymerization for 24 hours at 230°C to provide a polyamide resin with an intrinsic viscosity of 1.0 dL/g.

Example 2

A prepolymer is produced using the same method of Example 1, except for using 100 parts by weight PET, 19.1 parts by weight 1,4-butanediamine, 37.7 parts by weight 1,6-hexanediamine, 5.1 parts by weight benzoic acid, and 0.16 parts by weight sodium hypophosphinate. After completion of the reaction, a polyamide prepolymer with an intrinsic viscosity of 0.23 dL/g level is collected.

The polyamide prepolymer obtained by the method above is subject to further solid state polymerization for 24 hours at 230°C to provide a polyamide resin with an intrinsic viscosity of 1.05 dL/g.

Example 3

A polyamide prepolymer is produced using the same method of Example 1, except for using 100 parts by weight PET, 37.3 parts by weight 1,6-hexanediamine, 31.0 parts by weight 1,8-octanediamine, 3.8 parts by weight benzoic acid, and 0.17 parts by weight sodium hypophosphinate. After completion of the reaction, a polyamide prepolymer with an intrinsic viscosity of 0.22 dL/g level is collected.
The polyamide prepolymer obtained by the method above is subject to further solid state polymerization for 24 hours at 230°C to provide a polyamide resin with an intrinsic viscosity of 0.98 dL/g.

Example 4

A polyamide prepolymer is produced using the same method of Example 1, except for using 100 parts by weight PET, 43.1 parts by weight 1,6-hexanediamine, 27.5 parts by weight 1,10-decanediamine, 2.5 parts by weight benzoic acid, and 0.17 parts by weight sodium hypophosphinate. After completion of the reaction, a polyamide prepolymer with an intrinsic viscosity of 0.20 dL/g level is collected.
The polyamide prepolymer obtained by the method above is subject to further solid state polymerization for 24 hours at 230°C to provide a polyamide resin with an intrinsic viscosity of 1.02 dL/g.

Example 5

A polyamide prepolymer is produced using the same method of Example 1, except for using 100 parts by weight PET, 42.7 parts by weight 1,6-hexanediamine, 31.6 parts by weight 1,12-dodecanediamine, 1.27 parts by weight benzoic acid, and 0.18 parts by weight sodium hypophosphinate. After completion of the reaction, a polyamide prepolymer with an intrinsic viscosity of 0.23 dL/g level is collected.
The polyamide prepolymer obtained by the method above is subject to further solid state polymerization for 24 hours at 230°C to provide a polyamide resin with an intrinsic viscosity of 1.01 dL/g.

Example 6

A polyamide prepolymer is produced using the same method of Example 1, except for using 100 parts by weight PET, 13.1 parts by weight 1,2-ethanediamine, 38.1 parts by weight 1,6-hexanediamine, 7.1 parts by weight methyl benzoate, and 0.16 parts by weight sodium hypophosphinate. After completion of the reaction, a polyamide prepolymer with an intrinsic viscosity of 0.22 dL/g level is collected.
The polyamide prepolymer obtained by the method above is subject to further solid state polymerization for 24 hours at 230°C to provide a polyamide resin with an intrinsic viscosity of 1.04 dL/g.

Example 7

100 parts by weight PET, 13.1 parts by weight 1,2-ethanediamine, 38.1 parts by weight 1,6-hexanediamine, 6.36 parts by weight benzoic acid, and 0.16 parts by weight sodium hypophosphinate are placed into a 1 liter of autoclave, which is charged with nitrogen and purged several times to remove oxygen. The reactor is sealed and the reactants are stirred for 2 hours at 140°C. Then the temperature is raised to 160°C for 30 minutes, and the reactants are reacted for 2 hours at the same temperature. The temperature is raised for 60 min to 180°C, and the reactants are maintained for 4 hours at this temperature. Then the pressure is reduced to less than 2 mbar to remove ethylene glycol. After completion of the reaction, a polyamide prepolymer with an intrinsic viscosity of 0.28 dL/g is collected.
The polyamide prepolymer obtained by the method above is subject to further solid state polymerization for 24 hours at 230°C to provide a polyamide resin with an intrinsic viscosity of 1.08 dL/g.

Example 8

A polyamide prepolymer is produced using the same method of Example 1, except for using 100 parts by weight PET, 43.1 parts by weight 1,6-hexanediamine, 27.5 parts by weight 1,10-decanediamine, and 0.17 parts by weight sodium hypophosphinate. After completion of the reaction, a polyamide prepolymer with an intrinsic viscosity of 0.25 dL/g is collected.
The polyamide prepolymer obtained by the method above is subject to further solid state polymerization for 24 hours at 230°C to provide a polyamide resin with an intrinsic viscosity of 1.24 dL/g.

Comparative example 1

A polyamide prepolymer is produced using the same method of Example 1, except for using 100 parts by weight PET, 62.2 parts by weight 1,6-hexanediamine, 3.8 parts by weight benzoic acid, and 0.17 parts by weight sodium hypophosphinate. After completion of the reaction, a polyamide prepolymer with an intrinsic viscosity of 0.15 dL/g is collected.

The polyamide prepolymer obtained by the method above is subject to further solid state polymerization for 24 hours at 230°C to provide a polyamide resin with an intrinsic viscosity of 0.35 dL/g.

Comparative example 2

A polyamide prepolymer is produced using the same method of Example 1, except for using 100 parts by weight PET, 13.1 parts by weight 1,2-ethanediamine, 28.9 parts by weight 1,4-butanediamine, 6.4 parts by weight benzoic acid, and 0.15 parts by weight sodium hypophosphinate. After completion of the reaction, a polyamide prepolymer with an intrinsic viscosity of 0.10 dL/g is collected.

The polyamide prepolymer obtained by the method above is subject to further solid state polymerization for 24 hours at 230°C to provide a polyamide resin with an intrinsic viscosity of 0.21 dL/g.

Comparative example 3

A polyamide prepolymer is produced using the same method of Example 7, except for sealing the reactor, stirring it for 2 hours at 80°C, raising the temperature to 100°C for 30 min and reacting it at this temperature for 2 hours. After completion of the reaction, a polyamide prepolymer with an intrinsic viscosity of 0.10 dL/g level is collected.

The polyamide prepolymer obtained by the method above is subject to further solid state polymerization for 24 hours at 230°C to provide a polyamide resin with an intrinsic viscosity of 0.15 dL/g.

Physical properties evaluation

Samples of the polyamide resins produced from the examples and comparative examples before and after solid phase polymerization are measured for heat properties, intrinsic viscosity and end groups. Heat properties are measured using a Differential Scanning Calorimeter (DSC) and Thermogravimetric analyzer (TGA). After melting polyamide into concentrated sulfuric acid (98%), the intrinsic viscosity is measured using an Ubbelodhde viscometer at 25°C. The measurement of acid end groups is achieved by completely melting polyamide into o-cresol and using 0.1N KOH solution on a potential difference measurement. The measurement of amine end groups is achieved by completely melting polyamide into hexafluoroisopropanol and using 0.1N HCl solution on the potential difference measurement.

To measure water hygroscopic property, a sample having 100mm length, 100mm width and 3mm thickness is produced and dried. The dried weight ($W_0$) of the sample is measured, and then the weight ($W_1$) of the sample is measured after maintaining the sample at a temperature of 80°C and a relative humidity (RH) of 90% for 48 hours in a thermo-hygrostat.

$$\text{Water hygroscopic property } (\%) = [(W_1 - W_0)/ W_0] *100$$

The brightness L* value is measured by using a colorimeter in accordance with ASTM D 1209.

**Table 1**

| | | Example | | | | | | | | Comparative example | | |
|---|---|---|---|---|---|---|---|---|---|---|---|---|
| | | 1 | 2 | 3 | 4 | 5 | 6 | 7 | 8 | 1 | 2 | 3 |
| PET | | 100 | 100 | 100 | 100 | 100 | 100 | 100 | 100 | 100 | 100 | 100 |
| 1,2-ethanediamine | | 13.1 | - | - | - | - | 13.1 | 13.1 | - | - | 13.1 | 13.1 |
| 1,4-butanediamine | | - | 19.1 | - | - | - | - | - | - | - | 28.9 | - |
| 1,6-hexanediamine | | 38.1 | 37.7 | 37.3 | 43.1 | 42.7 | 38.1 | 38.1 | 43.1 | 62.2 | - | 38.1 |

(continued)

| | Example | | | | | | | | Comparative example | | |
|---|---|---|---|---|---|---|---|---|---|---|---|
| (component units: parts by weight) | 1 | 2 | 3 | 4 | 5 | 6 | 7 | 8 | 1 | 2 | 3 |
| 1,8-octanediamine | - | - | 31.0 | - | - | - | - | - | - | - | - |
| 1,10-decanediamine | - | - | - | 27.5 | - | - | - | 27.5 | - | - | - |
| 1,12-dodecanediamine | - | - | - | - | 31.6 | - | - | - | - | - | - |
| Benzoic acid | 6.36 | 5.1 | 3.8 | 2.5 | 1.27 | - | 6.36 | - | 3.8 | 6.4 | 6.36 |
| Methylbenzoate | - | - | - | - | - | 7.1 | - | - | - | - | - |
| Sodium hypophosphinate | 0.16 | 0.16 | 0.17 | 0.17 | 0.18 | 0.16 | 0.16 | 0.17 | 0.17 | 0.15 | 0.16 |
| Melting temp. (°C) | 300 | 295 | 290 | 320 | 318 | 303 | 305 | 310 | Fail | Fail | Fail |
| Crystallization temp. (°C) | 260 | 263 | 265 | 298 | 297 | 261 | 265 | 280 | Fail | Fail | Fail |
| Pyrolysis temp (°C) | 430 | 435 | 440 | 444 | 445 | 435 | 435 | 440 | 418 | 420 | 417 |
| Intrinsic viscosity (dL/g) | 1.00 | 1.05 | 0.98 | 1.02 | 1.01 | 1.04 | 1.08 | 1.24 | 0.35 | 0.21 | 0.15 |
| Acid end group ($\mu$eq/g) | 80 | 85 | 75 | 60 | 50 | 83 | 75 | 65 | 100 | 105 | Fail |
| Amine end group ($\mu$eq/g) | 150 | 130 | 100 | 65 | 40 | 130 | 121 | 150 | 500 | 1000 | Fail |
| hygroscopic property (%) | 4.5 | 4.2 | 2.8 | 2.0 | 1.5 | 4.4 | 4.2 | 2.4 | 4.0 | 5.9 | 6.5 |
| Brightness (L*) | 80 | 85 | 88 | 92 | 95 | 82 | 84 | 90 | 65 | 67 | 63 |

Referring to Table 1, the polyamide resins in examples 1 to 8 have an excellent melting temperature, crystallization temperature and pyrolysis temperature, indicating that these resins have excellent heat resistance. In addition, the resins of examples 1 to 8 have excellent brightness and low hygroscopic property, which means that an excellent color expression is possible. In addition, the number of acid end groups and the number of amine end groups are lower than the comparative examples.

The polyamide resin of comparative example 1 did not have heat resistance, because comparative example 1 uses one kind of aliphatic diamine monomer (1,6 hexane diamine), and the melting temperature and crystallization temperature could not be measured due to low reactivity. Similar to comparative example 1, the polyamide resin of comparative example 2 did not have heat resistance, since comparative example 2 used two kinds of aliphatic diamine monomers with 6 or fewer carbon atoms.

In comparative example 3 solid phase polymerization is conducted using conditions of time and temperature outside of the range of the present invention. Therefore, it is impossible to measure melting temperature, crystallization temperature, and acid and amine end group due to low reactivity in comparative example 3.

**Claims**

1. A polyamide resin obtainable by solid state polymerization of an aliphatic diamine monomer mixture (A) and polyester resin (B) with an endcapping agent (C), wherein the aliphatic diamine monomer mixture (A) comprises an aliphatic diamine monomer (a1) having 2 to 6 carbon atoms, and an aliphatic diamine monomer (a2) having 6 to 12 carbon atoms, with the proviso that (a1) and (a2) are different and have a different number of carbon atoms;
wherein the ester group of the polyester resin (B) reacts with the aliphatic diamine monomer (a1), (a2), or both such that the number of amine ends of the polyamide resin is 30 $\mu$ eq/g to 200 $\mu$ eq/g measured by completely melting polyamide into hexafluoroisopropanol and using 0.1N HCl solution on the potential difference measurement, and wherein the amount of the endcapping agent is from 0.01 to 10.0 parts by weight, based on 100 parts by weight of polyester resin (B).

2. The polyamide resin of claim 1, wherein the aliphatic diamine monomer mixture (A) comprises 10 to 60 parts by weight of the aliphatic diamine monomer (a1) having 2 to 6 carbon atoms and 10 to 60 parts by weight of the aliphatic diamine monomer (a2) having 6 to 12 carbon atoms, based on 100 parts by weight of the polyester resin (B).

3. The polyamide resin of any of claims 1 to 2, wherein the ratio of the total moles of the aliphatic diamine monomer mixture and the total moles of polyester resin is 0.90 to 1.50.

4. The polyamide resin of any of claims 1 to 3, wherein the aliphatic diamine monomer (a1) having 2 to 6 carbon atoms comprises 1,2-ethanediamine, 1,4-butanediamine, 1,5-pentanediamine, 1,6-hexanediamine, 2-methylpentanediamine, 3-methyl-1,5-pentanediamine or a combination thereof.

5. The polyamide resin of any of claims 1 to 4, wherein the aliphatic diamine monomer (a2) having 6 to 12 carbon atoms comprises 1,6-hexanediamine, 1,7-heptanediamine, 1,8-octanediamine, 1,10-decanediamine, 1,11-undecanediamine, 1,2-dodecanediamine, 3-methyl-1,5-pentanediamine, 2,2,4-trimethyl-1,6-hexanediamine, 2,4,4-trymethyl-1,6-hexanediamine, 5-methyl-1,9-nonanediamine, 2,2-oxybis(ethylamine), bis(3-aminopropyl)ether, ethylene glycol bis(3-aminopropyl)ether (EGBA), 1,7-diamino-3,5-dioxoheptane, 1,10-diamino-4,7-dioxoundecane, 1,10-diamino-4,7-dioxo-5methyledecane, 1,-11-undecanediamine, 1,12-dodecanediamine, 2-butyl-2-ethyl-1,5-pentanediamine or a combination thereof.

6. The polyamide resin of any of claims 1 to 5, wherein the polyester resin (B) is aliphatic polyester resin or aromatic polyester resin.

7. The polyamide resin of any of claims 1 to 6, wherein the endcapping agent comprises an aliphatic carboxylic acid, an aromatic carboxylic acid, an aliphatic carboxylic acid ester, an aromatic carboxylic acid ester, or a combination thereof.

8. The polyamide resin of claim 7, wherein the aliphatic carboxylic acid is selected from the group comprising acetic acid, propionic acid, butyric acid, valeric acid, caproic acid, caprilic acid, lauric acid, tridecane acid, myristic acid, palmitic acid, stearic acid, pivalic acid, isobutylic acid, or a combination thereof; wherein the aromatic carboxylic acid is selected from the group comprising benzoic acid, toluic acid, $\alpha$-naphtalenecarboxylic acid, $\beta$-naphtalenecar-boxylic acid, methylnaphtalenecarboxylic acid, or a combination thereof; wherein the aliphatic carboxylic acid ester is selected from the group comprising methylacetate, ethylacetate, propylacetate, butylacetate, amylacetate, 2-ethoxyethyl acetate, or a combination thereof; or, wherein the aromatic carboxylic acid ester is selected from the group comprising methyl benzoate, ethyl benzoate, propyl benzoate, butyl benzoate, pentyl benzoate, or a combination thereof.

9. The polyamide resin of any of claims 1 to 8, wherein the polyamide resin has an intrinsic viscosity of 0.2 dL/g to 4.0 dL/g measured after melting polyamide into concentrated sulfuric acid (98%) using an Ubbelohde viscometer at 25°C.

10. A method for producing polyamide resin comprising:

   reacting without using an organic solvent an aliphatic diamine monomer mixture (A) comprising an aliphatic diamine monomer (a1) having 2 to 6 carbon atoms and an aliphatic diamine monomer (a2) having 6 to 12 carbon atoms, with the proviso that (a1) and (a2) are different and have a different number of carbon atoms, polyester resin (B), and an endcapping agent (C) in the presence of a phosphorous catalyst for about 2 hours at a temperature of 120 to 140°C;
   increasing the temperature to 140 to 180°C, maintaining the temperature for 2 to 4 hours to provide a polyamide prepolymer; and
   reducing the pressure to 2 to 10 mbar or less than 2 mbar at a temperature of 180 to 200°C for 3 to 22 hours to remove ethylene glycol byproduct, and
   wherein the endcapping agent comprises an aliphatic carboxylic acid, an aromatic carboxylic acid, an aliphatic carboxylic acid ester, an aromatic carboxylic acid ester, or a combination thereof, and
   wherein the amount of the endcapping agent is from 0.01 to 10.0 parts by weight, based on 100 parts by weight of polyester resin (B).

11. The method of claim 10, further comprising subjecting the polyamide prepolymer to solid phase condensation, and wherein the solid phase condensation step is conducted in a vacuum for 10 to 30 hrs at a temperature of 180 to 250°C.

12. The method of claim 10 or 11, wherein the catalyst comprises phosphoric acid, phosphorous acid, hypophosphorous acid, sodium hypophosphate, sodium hypophosphinate or a combination thereof.

13. The method of any of claims 10 to 12, wherein the aliphatic diamine monomer mixture (A) comprises 10 to 60 parts by weight of the aliphatic diamine monomer (a1) and 10 to 60 parts by weight of the aliphatic diamine monomer (a2), based on 100 parts by weight of the polyester resin (B); and wherein the phosphorous catalyst is included in an amount of at 0.01 to 3.0 parts by weight, based on 100 parts by weight of the polyester resin (B).

**Patentansprüche**

1. Polyamidharz, erhältlich durch Festphasen-Polymerisation eines aliphatischen Diaminmonomergemisches (A) und Polyesterharzes (B) mit einem Endkappungsmittel (C), wobei das aliphatische Diaminmonomergemisch (A) ein aliphatisches Diaminmonomer (a1) mit 2 bis 6 Kohlenstoffatomen und ein aliphatisches Diaminmonomer (a2) mit 6 bis 12 Kohlenstoffatomen umfasst, mit der Maßgabe, dass (a1) und (a2) verschieden sind und eine unterschiedliche Anzahl von Kohlenstoffatomen aufweisen;
wobei die Estergruppe des Polyesterharzes (B) mit dem aliphatischen Diaminmonomer (a1), (a2), oder beiden derart reagiert, dass die Anzahl der Amin-Enden des Polyamidharzes 30 μ eq/g bis 200 μ eq/g beträgt, gemessen durch vollständiges Schmelzen von Polyamid in Hexafluorisopropanol und unter Verwendung von 0,1 N HCl-Lösung bei der Potenzial-Differenz-Messung, und
wobei die Menge des Endkappungsmittels von 0,01 bis 10,0 Gewichtsteile, bezogen auf 100 Gewichtsteile Polyesterharz (B), reicht.

2. Polyamidharz nach Anspruch 1, wobei das aliphatische Diaminmonomergemisch (A) 10 bis 60 Gewichtsteile des aliphatischen Diaminmonomers (a1) mit 2 bis 6 Kohlenstoffatomen und 10 bis 60 Gewichtsteile des aliphatischen Diaminmonomers (a2) mit 6 bis 12 Kohlenstoffatomen, bezogen auf 100 Gewichtsteile des Polyesterharzes (B), umfasst.

3. Polyamidharz nach irgendeinem der Ansprüche 1 bis 2, wobei das Verhältnis der gesamten Mole des aliphatischen Diaminmonomergemisches und der gesamten Mole des Polyesterharzes 0,90 bis 1,50 beträgt.

4. Polyamidharz nach irgendeinem der Ansprüche 1 bis 3, wobei das aliphatische Diaminmonomer (a1) mit 2 bis 6 Kohlenstoffatomen 1,2-Ethandiamin, 1,4-Butandiamin, 1,5-Pentandiamin, 1,6-Hexandiamin, 2-Methylpentandiamin, 3-Methyl-1,5-pentandiamin, oder eine Kombination davon umfasst.

5. Polyamidharz nach irgendeinem der Ansprüche 1 bis 4, wobei das aliphatische Diaminmonor (a2) mit 6 bis 12 Kohlenstoffatomen 1,6-Hexandiamin, 1,7-Heptandiamin, 1,8-Octandiamin, 1,10-Decandiamin, 1,11-Undecandiamin, 1,2-Dodecandiamin, 3-Methyl-1,5-pentandiamin, 2,2,4-Trimethyl-1,6-hexandiamin, 2,4,4-Trimethyl-1,6-hexandiamin, 5-Methyl-1,9-nonan-diamin, 2,2-Oxybis(ethylamin), Bis(3-aminopropyl)ether, Ethylenglycol-bis(3-aminopropyl)ether (EGBA), 1,7-Diamino-3,5-dioxoheptan, 1,10-Diamino-4,7-dioxoundecan, 1,10-Diamino-4,7-dioxo-5-methyldecan, 1,11-Undecandiamin, 1,12-Dodecandiamin, 2-Butyl-2-ethyl-1,5-pentandiamin, oder eine Kombination davon umfasst.

6. Polyamidharz nach irgendeinem der Ansprüche 1 bis 5, wobei das Polyesterharz (B) ein aliphatisches Polyesterharz oder ein aromatisches Polyesterharz ist.

7. Polyamidharz nach irgendeinem der Ansprüche 1 bis 6, wobei das Endkappungsmittel eine aliphatische Carbonsäure, eine aromatische Carbonsäure, einen aliphatischen Carbonsäureester, einen aromatischen Carbonsäureester, oder eine Kombination davon umfasst.

8. Polyamidharz nach Anspruch 7, wobei die aliphatische Carbonsäure ausgewählt ist aus der Gruppe umfassend Essigsäure, Propionsäure, Buttersäure, Valeriansäure, Capronsäure, Caprylsäure, Laurinsäure, Tridecansäure, Myristinsäure, Palmitinsäure, Stearinsäure, Pivalinsäure, Isobutylsäure, oder eine Kombination davon; wobei die aromatische Carbonsäure ausgewählt ist aus der Gruppe umfassend Benzoesäure, Toluylsäure, α-Naphthalincarbonsäure, β-Naphthalincarbonsäure, Methylnaphthalincarbonsäure, oder eine Kombination davon; wobei der aliphatische Carbonsäureester ausgewählt ist aus der Gruppe umfassend Methylacetat, Ethylacetat, Propylacetat, Butylacetat, Amylacetat, 2-Ethoxyethylacetat, oder eine Kombination davon; oder, wobei der aromatische Carbonsäureester ausgewählt ist aus der Gruppe umfassend Methylbenzoat, Ethylbenzoat, Propylbenzoat, Butylbenzoat, Pentylbenzoat, oder eine Kombination davon.

9. Polyamidharz nach irgendeinem der Ansprüche 1 bis 8, wobei das Polyamidharz eine intrinsische Viskosität bzw.

Strukturviskosität von 0,2 dl/g bis 4,0 dl/g aufweist, gemessen nach Schmelzen von Polyamid in konzentrierter Schwefelsäure (98 %) unter Verwendung eines Ubbelohde-Viskometers bei 25 °C.

**10.** Verfahren zur Herstellung eines Polyamidharzes, umfassend:

Umsetzen ohne Verwendung eines organischen Lösungsmittels von einem aliphatischen Diaminmonomergemisch (A) umfassend ein aliphatisches Diaminmonomer (a1) mit 2 bis 6 Kohlenstoffatomen und ein aliphatisches Diaminmonomer (a2) mit 6 bis 12 Kohlenstoffatomen, mit der Maßgabe, dass (a1) und (a2) verschieden sind und eine unterschiedliche Anzahl an Kohlenstoffatomen aufweisen, einem Polyesterharz (B), und einem Endkappungsmittel (C) in Anwesenheit eines Phosphorkatalysators für etwa 2 Stunden bei einer Temperatur von 120 bis 140 °C;
Erhöhen der Temperatur auf 140 bis 180 °C, Halten der Temperatur für 2 bis 4 Stunden, um ein Polyamid-Präpolymer bereitzustellen; und
Verringern des Druckes auf 2 bis 10 mbar oder weniger als 2 mbar bei einer Temperatur von 180 bis 200 °C für 3 bis 22 Stunden, um Ethylenglykol-Nebenprodukt zu entfernen, und
wobei das Endkappungsmittel eine aliphatische Carbonsäure, eine aromatische Carbonsäure, einen aliphatischen Carbonsäureester, einen aromatischen Carbonsäureester, oder eine Kombination davon umfasst, und
wobei die Menge des Endkappungsmittels von 0,01 bis 10,0 Gewichtsteile, bezogen auf 100 Gewichtsteile Polyesterharz (B), reicht.

**11.** Verfahren nach Anspruch 10, weiterhin umfassend, dass das Polyamid-Präpolymer einer Festphasen-Kondensation unterworfen wird, und wobei der Festphasen-Kondensationsschritt in einem Vakuum für 10 bis 30 Stunden bei einer Temperatur von 180 bis 250 °C durchgeführt wird.

**12.** Verfahren nach Anspruch 10 oder 11, wobei der Katalysator Phosphorsäure, phosphorige Säure, hypophosphorige Säure, Natriumhypophosphat, Natriumhypophosphinat, oder eine Kombination davon umfasst.

**13.** Verfahren nach irgendeinem der Ansprüche 10 bis 12, wobei das aliphatische Diaminmonomergemisch (A) 10 bis 60 Gewichtsteile des aliphatischen Diaminmonomers (a1) und 10 bis 60 Gewichtsteile des aliphatischen Diaminmonomers (a2), bezogen auf 100 Gewichtsteile des Polyesterharzes (B), umfasst; und wobei der Phosphorkatalysator in einer Menge von 0,01 bis 3,0 Gewichtsteile, bezogen auf 100 Gewichtsteile des Polyesterharzes (B), eingeschlossen ist.

## Revendications

**1.** Résine de polyamide pouvant être obtenue par polymérisation à l'état solide d'un mélange de diamines aliphatiques monomères (A), et d'une résine de polyester (B) avec un agent de coiffage en bout (C), le mélange de diamines aliphatiques monomères (A) comprenant une diamine aliphatique monomère (a1) ayant 2 à 6 atomes de carbone, et une diamine aliphatique monomère (a2) ayant 6 à 12 atomes de carbone, à la condition que (a1) et (a2) soient différents et présentent des nombres différents d'atomes de carbone ;
le groupe ester de la résine de polyester (B) réagissant avec la diamine aliphatique monomère (a1), (a2), ou les deux, de telle sorte que le nombre d'extrémités amine de la résine de polyamide soit de 30 µéq/g à 200 µéq/g, mesurée par fusion complète du polyamide dans de l'hexafluoroisopropanol et par utilisation d'une solution de HCl 0,1 N sur la mesure de la différence de potentiel, et
la quantité de l'agent de coiffage en bout étant de 0,01 à 10,0 parties en poids pour 100 parties en poids de la résine de polyester (B).

**2.** Résine de polyamide selon la revendication 1, dans laquelle le mélange de diamines aliphatiques monomères (A) comprend 10 à 60 parties en poids de la diamine aliphatique monomère (a1) ayant 2 à 6 atomes de carbone et 10 à 60 parties en poids de la diamine aliphatique monomère (a2) ayant 6 à 12 atomes de carbone, pour 100 parties en poids de la résine de polyester (B).

**3.** Résine de polyamide selon l'une des revendications 1 à 2, dans laquelle le rapport du nombre total de moles du mélange de diamines aliphatiques monomères et du nombre total de moles de la résine de polyester est de 0,90 à 1,50.

**4.** Résine de polyamide selon l'une des revendications 1 à 3, dans laquelle la diamine aliphatique monomère (a1) ayant 2 à 6 atomes de carbone comprend la 1,2-éthanediamine, la 1,4-butanediamine, la 1,5-pentanediamine, la 1,6-hexanediamine, la 2-méthylpentanediamine, la 3-méthyl-1,5-pentanediamine ou une combinaison d'entre eux.

5. Résine de polyamide selon l'une des revendications 1 à 4, dans laquelle la diamine aliphatique monomère (a2) ayant 6 à 12 atomes de carbone comprend la 1,6-hexanediamine, la 1,7-heptanediamine, la 1,8-octanediamine, la 1,10-décanediamine, la 1,11-undécanediamine, la 1,2-dodécanediamine, la 3-méthyl-1,5-pentanediamine, la 2,2,4-triméthyl-1,6-hexanediamine, la 2,4,4-triméthyl-1,6-hexanediamine, la 5-méthyl-1,9-nonanediamine, la 2,2-oxy-bis(éthylamine), le bis(3-aminopropyl)éther, l'éther bis(3-aminopropylique) de l'éthylèneglycol (EGBA), le 1,7-diamino-3,5-dioxoheptane, le 1,10-diamino-4,7-dioxoundécane, le 1,10-diamino-4,7-dioxo-5-méthyldécane, la 1,11-undécanediamine, la 1,12-dodécanediamine, la 2-butyl-2-éthyl-1,5-pentanediamine ou une combinaison d'entre eux.

6. Résine de polyamide selon l'une des revendications 1 à 5, dans laquelle la résine de polyester (B) est une résine de polyester aliphatique ou une résine de polyester aromatique.

7. Résine de polyamide selon l'une des revendications 1 à 6, dans laquelle l'agent de coiffage en bout comprend un acide carboxylique aliphatique, un acide carboxylique aromatique, un ester d'acide carboxylique aliphatique, un ester d'acide carboxylique aromatique, ou une combinaison d'entre eux.

8. Résine de polyamide selon la revendication 7, dans laquelle l'acide carboxylique aliphatique est choisi dans le groupe comprenant l'acide acétique, l'acide propionique, l'acide butyrique, l'acide valérique, l'acide caproïque, l'acide caprylique, l'acide laurique, l'acide tridécanoïque, l'acide myristique, l'acide palmitique, l'acide stéarique, l'acide pivalique, l'acide isobutylique ou une combinaison d'entre eux ; dans laquelle l'acide carboxylique aromatique est choisi dans le groupe comprenant l'acide benzoïque, l'acide toluique, l'acide $\alpha$-naphtalènecarboxylique, l'acide $\beta$-naphtalènecarboxylique, l'acide méthylnaphtalènecarboxylique, ou une combinaison d'entre eux ; dans lequel l'ester d'acide carboxylique aliphatique est choisi dans le groupe comprenant l'acétate de méthyle, l'acétate d'éthyle, l'acétate de propyle, l'acétate de butyle, l'acétate d'amyle, l'acide de 2-éthoxyéthyle, ou une combinaison d'entre eux ; ou dans laquelle l'ester d'acide carboxylique aromatique est choisi dans le groupe comprenant le benzoate de méthyle, le benzoate d'éthyle, le benzoate de propyle, le benzoate de butyle, le benzoate de pentyle, ou une combinaison d'entre eux.

9. Résine de polyamide selon l'une des revendications 1 à 8, dans lequel la résine de polyamide a une viscosité intrinsèque de 0,2 dl/g à 4,0 dl/g, mesurée après fusion du polyamide dans de l'acide sulfurique concentré à 98 % par utilisation d'un viscosimètre Ubbelohde à 25 °C.

10. Procédé de production d'une résine de polyamide, comprenant :

la réaction, sans utilisation d'un solvant organique, d'un mélange de diamines aliphatiques monomères (A) comprenant une diamine aliphatique monomère (a1) ayant 2 à 6 atomes de carbone et une diamine aliphatique monomère (a2) ayant 6 à 12 atomes de carbone, à la condition que (a1) et (a2) soient différents et présentent des nombres différents d'atomes de carbone, d'une résine de polyester (B) et d'un agent de coiffage en bout (C) en présence d'un catalyseur au phosphore pendant environ 2 heures à une température de 120 à 140 °C ; l'élévation de la température à 140 à 180 °C, le maintien de la température pendant 2 à 4 heures pour fournir un prépolymère de polyamide ; et
la réduction de la pression à 2 à 10 mbar ou à moins de 2 mbar à une température de 180 à 200 °C pendant 3 à 22 heures pour éliminer le sous-produit éthylèneglycol ; et
dans lequel l'agent de coiffage en bout comprend un acide carboxylique aliphatique, un acide carboxylique aromatique, un ester d'acide carboxylique aliphatique, un ester d'acide carboxylique aromatique ou une combinaison d'entre eux, et
dans lequel la quantité de l'agent de coiffage en bout est de 0,01 à 10,0 parties en poids pour 100 parties en poids de la résine de polyester (B).

11. Procédé selon la revendication 10, comprenant en outre la soumission du prépolymère de polyamide à une condensation en phase solide, et dans lequel l'étape de condensation en phase solide est effectuée sous vide pendant 10 à 30 heures à une température de 180 à 250 °C.

12. Procédé selon la revendication 10 ou 11, dans lequel le catalyseur comprend l'acide phosphorique, l'acide phosphoreux, l'acide hypophosphoreux, l'hypophosphate de sodium, l'hypophosphinate de sodium ou une combinaison d'entre eux.

13. Procédé selon l'une quelconque des revendications 10 à 12, dans lequel le mélange de diamines aliphatiques monomères (A) comprend 10 à 60 parties en poids de la diamine aliphatique monomère (a1) et 10 à 60 parties en poids de la diamine aliphatique monomère (a2) pour 100 parties en poids de la résine de polyester (B) ; et dans lequel le catalyseur au phosphore est présent en une quantité de 0,01 à 3,0 parties en poids pour 100 parties en poids de la résine de polyester (B).

**EP 2 471 839 B1**

**Patent documents cited in the description**

- US 6384181 B
- US 5837803 A
- JP 4317615 B
- JP 3664577 B
- KR 200270589
- WO 03078502 A1